# EUROPÄISCHE PATENTSCHRIFT

(11) **EP 1 719 237 B1**
(45) Veröffentlichungstag und Bekanntmachung des Hinweises auf die Patenterteilung: **25.09.2013**
(21) Anmeldenummer: 05701567.9
(22) Anmeldetag: 20.01.2005
(51) Int. Cl.: H02K 7/08

(54) **GETRIEBE-ANTRIEBSEINHEIT**
GEARING DRIVE UNIT
UNITE D'ENTRAINEMENT A TRANSMISSION

(30) Priorität: 17.02.2004 DE 102004007873; 12.03.2004 DE 102004012077
(43) Veröffentlichungstag der Anmeldung: 08.11.2006
(73) Patentinhaber: ROBERT BOSCH GMBH, 70442 Stuttgart (DE)
(72) Erfinder: SCHWENDEMANN, Franz, 77833 Ottersweier (DE)
(86) Internationale Anmeldenummer: PCT/EP2005/050233
(87) Internationale Veröffentlichungsnummer: WO 2005/081382

(56) Entgegenhaltungen:
- FR-A- 2 050 196
- US-A- 2 987 349
- US-A- 4 318 573
- US-A1- 2003 172 761

## Beschreibung

### Stand der Technik

Die Erfindung betrifft eine Getriebe-Antriebseinheit, insbesondere zum Verstellen beweglicher Teile im Kraftfahrzeug nach der Gattung des unabhängigen Anspruchs.

Mit der DE 297 02 525 U1 ist eine solche Antriebseinheit bekannt geworden, bei der ein elektrischer Antriebsmotor über eine Ankerwelle mit einem nachgeordneten Getriebe wirkverbunden ist. Die Ankerwelle ist mehrfach in einem mehrteiligen Gehäuse gelagert und erstreckt sich bis in den Bereich des Getriebes. Auf der Ankerwelle ist eine mit einem Schneckenrad kommunizierende Schnecke aufgepresst. An ihren Stirnseiten ist die Ankerwelle über Anlaufscheiben sowie einem Dämpfungsmittel, am Gehäuse abgestützt.

Bei einem solchen Antrieb, der beispielsweise bei einem Fensterheber oder einer Sitzverstellung eingesetzt wird, wirken auf die Schnecke sowohl Kräfte in radialer Richtung und in Umfangsrichtung, als auch in axialer Richtung. Insbesondere wenn das zu verstellende Teil gegen einen Anschlag fährt, wirken hohe stoßartige axiale Kräfte auf die Schnecke, wodurch sich die Verbindung zwischen der Ankerwelle und der auf diese aufgepresste Schnecke lösen kann.

Mit der US 2,987,349 A ist eine Antriebseinheit bekannt geworden, bei der eine auf einer Ankerwelle angeordnete Schnecke mit einem Schneckenrad kämmt. Die Schnecke ist hierbei topfförmig ausgebildet und derart auf die Ankerwelle aufgeschoben, dass der Topfboden einen Abstand zur Stirnseite der Ankerwelle aufweist.

### Vorteile der Erfindung

Die efindungsgemäße Vorrichtung mit den Merkmalen des unabhängigen Anspruchs 1 hat den Vorteil, dass durch das Ausbilden einer axialen Anlagefläche an das auf der Rotorwelle gelagerte Verzahnungselement auch starke und stoßartige auf das Verzahnungselement einwirkende axiale Kräfte an das Gehäuse abgeführt werden können. Hierzu liegt das Verzahnungselement mit seiner Anlagefläche einerseits an einer der Stirnfläche der Rotorwelle an und stützt sich andererseits axial am Gehäuse ab, so dass die drehfeste Verbindung zwischen der Ankerwelle und dem Verzahnungselement lediglich die auf dieses einwirkende Drehmomente ableiten muss. Dadurch kann die form- oder kraftschlüssige Verbindung zwischen dem Verzahnungselement und der Rotorwelle auf einen kleineren axialen Bereich oder auf einen geringere radiale

Verformungen begrenzt werden, wodurch sich die Montage des Verzahnungselements wesentlich vereinfacht. Dazu lässt sich in besonders einfacher und platzsparender Weise die Anlagefläche durch eine Bodenfläche in einer Bohrung realisieren und im Verzahnungselement wird eine zentrale axiale Sackbohrung angebracht, so dass ein hülsenförmiges, außenverzahntes Teil entsteht, das an einem axialen Ende zumindest teilweise geschlossen ist. Zur Montage der Rotorwelle in die Sackbohrung des Verzahnungselements ist erfindungsgemäß, an der Bodenfläche der Bohrung einen Durchbruch ausgebildet, damit die im Sackloch eingeschlossene Luft entweichen kann. Dieser Durchbruch kann besonders vorteilhaft zur Lagerung einer Kugel verwendet werden, die eine gewölbte Abstützfläche bildet, mit der sich das Verzahnungselement am Gehäuse abstützt.

Durch die in den Unteransprüchen aufgeführten Merkmale sind vorteilhafte Weiterbildungen der Vorrichtung nach dem unabhängigen Anspruch möglich.

In vorteilhafter Weise liegt zur axialen Abstützung des Verzahnungselements, dessen als Anlagefläche ausgebildete Bodenfläche der Sackbohrung einerseits an der Stirnfläche der Rotorwelle an, während eine der Anlagefläche gegenüberliegende Abstützfläche an einem Gehäuseteil, oder einem in diesem angeordneten Abstützelement anliegt.

Um die Reibung der Antriebseinheit im Betrieb zu verringern, bzw. deren Wirkungsgrad zu erhöhen, ist die Abstützfläche besonders günstig als gewölbte Fläche ausgebildet, die sich näherungsweise punktförmig an einer ebenen korrespondierenden gehäusefesten Fläche abstützt. Die gleiche Wirkung wird erzielt, wenn ein solcher Radius an der gehäusefesten Fläche angeformt ist und die Abstützfläche des Verzahnungselements entsprechend eben ausgebildet ist.

Um das Verzahnungselement drehfest auf der Rotorwelle zu fixieren, werden auf der Ankerwelle mittels Materialumformung radiale Ausformungen angeformt, die einen größeren Außendurchmesser aufweisen, als der korrespondierende Innendurchmesser der Bohrung. In Abhängigkeit der Materialkombinatien zwischen der Rotorwelle und dem Verzahnungselement entsteht hierbei beim Aufpressen des Verzahnungselement eine kraftschlüssige oder eine formschlüssige Verbindung oder eine Kombination derselben.

Dadurch, dass diese drehfeste Verbindung keine Axialkräfte aufzunehmen braucht, können die radialen Ausformungen derart ausgebildet sein, dass die Montagekräfte beim Aufpressen des Verzahnungselements reduziert werden können.

Eine solche Reduktion der Montagekräfte wird beispielsweise dadurch erreicht, dass die radialen Ausformungen lediglich am Ende der Rotorwelle angeformt werden und der korrespondierende Durchmesser der Bohrung in diesem axialen Bereich geringer ist, als über die restliche Länge der Bohrung.

Bei einer solchen Ausbildung der drehfesten Verbindung, kann die Rotorwelle kostengünstig über deren gesamten Länge durchgangsgeschliffen werden, so dass auf diese über die radialen Ausformungen ein Lager auf ein Lagersitz der Rotorwelle aufgeschoben werden kann. Die radialen Ausformungen sind hier beispielsweise als eine Rändelung ausgebildet, die mit der Welle überschliffen wird und dann in den Bereich der Bohrung mit dem geringeren Durchmesser eingepresst wird.

Ist die Verbindung zwischen der Rotorwelle und der Bohrung des Verzahnungselements nur über einen Bruchteil dessen Länge als Presspassung ausgebildet, können dadurch die zur Montage notwendigen Einpresskräfte deutlich reduziert werden. Der restliche Bereich der Bohrung ist dabei vorteilhaft als Spielpassung ausgebildet, wobei dieser Bereich zur Zentrierung des Verzahnungselements dient.

Besonders geeignet ist eine solche Befestigung des Verzahnungselements für die Verwendung in einem Schneckengetriebe, bei dem das als Schnecke ausgebildete Verzahnungselement mit einem Schneckrad in Eingriff steht. Dabei können die bei der Montage der hülsenförmigen Schnecke notwendigen Aufpresskräfte signifikant reduziert werden. Die Verbindung eignet sich aber auch für die Ausbildung des Verzahnungselements als Ritzel mit gerader oder schräger Verzahnung, die mit einer korrespondierenden Verzahnung, beispielsweise eines Abtriebsrads, kämmt.

### Zeichnungen

In der Zeichnung ist ein Ausführungsbeispiel einer erfindungsgemäßen Vorrichtung dargestellt und in der nachfolgenden Beschreibung näher erläutert:
Figur 1
   zeigt einen teilweisen Schnitt durch eine erfindungsgemäße Getriebe-Antriebseinheit.

### Beschreibung

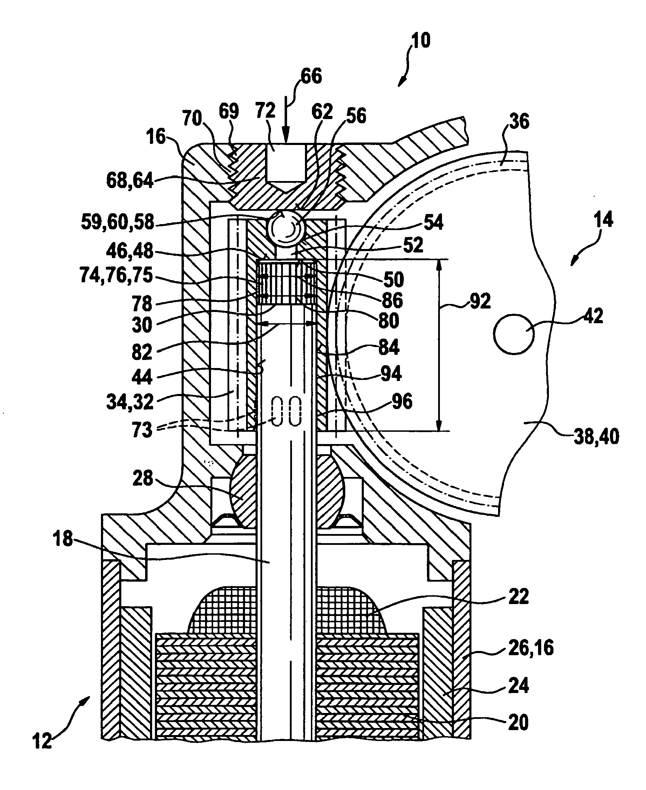

In der Figur 1 ist eine Getriebe-Antriebseinheit 10 dargestellt, mit einem Elektromotor 12 und einem Getriebe 14 einem diese umgebenden mehrteiligen Gehäuse 16. Elektromotor 12 weist ein auf einer Rotorwelle 18 gelagertes Ankerpaket 20 mit elektrischen Wicklungen 22 auf. Diese wirken mit Magneten 24 zusammen, die in einem als Poltopf 26 ausgebildeten Gehäuseteil 16 angeordnet sind. Die Rotorwelle 18 ist hier beispielsweise mittels Gleit- oder Wälzlager 28 im Gehäuse 16 gelagert und erstreckt sich mit einem Ende 30 bis in den Bereich des Getriebes 14. Auf der Rotorwelle 18 ist ein Verzahnungselement 32 angeordnet, das im Ausführungsbeispiel als Schnecke 34 ausgebildet ist. Das Verzahnungselement 32 kämmt mit einer Verzahnung 36 eines Getriebeelements 38, das hier als Schneckenrad 40 ausgebildet ist und auf einem gehäusefesten Bolzen 42 gelagert ist. Das Getriebeelement 38 ist mit einem nicht näher dargestellten beweglichen Stellglied verbunden, das beispielsweise Sitze im Kraftfahrzeug verstellt Das Verzahnungselement 32 ist als separates Bauteil hergestellt und weist eine zentrale Bohrung 44 auf, die als Sackbohrung ausgeführt ist. Am unteren Ende der Bohrung 44 weist diese eine Bodenfläche 46 auf, die als axiale Anlagefläche 48 ausgebildet ist und an einer Stirnseite 50 der Rotorwelle 18 anliegt. An der Bodenfläche 46 ist eine Durchgangsöffnung 52 angeordnet, durch die bei der Montage des Verzahnungselements 32 auf die Rotorwelle 18, Luft in die Umgebung entweichen kann. Die Durchgangsöffnung 52 ist hier gleichzeitig als Aufnahme 54 für ein kugelförmiges Lagerelement 56 ausgebildet, dessen Kugeloberfläche 58 eine axiale Abstützfläche 60 des Verzahnungselements 32 mit einem Radius 59 bildet. Die Rotorwelle 18 stützt sich über ihre Stirnseite 50 an der axialen Anlagefläche 48 des Verzahnungselements 32 ab. Das Verzahnungselement 32 stützt sich wiederum über die in der Aufnahme 54 gelagerte Kugel 56 über deren axiale Abstützfläche 60 an einer Gegenfläche 62 des Gehäuses 16 ab. Am gegenüberliegenden nicht dargestellten Ende der Rotorwelle 18, stützt sich diese ebenfalls an einer gehäusefesten Gegenfläche 62 ab. Zur Eliminierung des Axialspiels der Rotorwelle 18 ist zumindest eine der Gegenflächen 62 an einem Einstellelement 64 angeordnet, das mit einer vorgebbaren Anpresskraft 66 gegen die axiale Abstützfläche 60 gepresst wird. Hierzu ist das Einstellelement 64 beispielsweise als Einstellschraube 68 mit einem Gewinde 69, oder als Abstützelement 64 mit ebenen radialen Stegen ausgebildet, das in eine Wand 70 des Gehäuses 16 eingedreht wird. Hierzu weist das Einstellelement 64 einen Formschluss 72 auf, in den ein entsprechendes Montagewerkzeug eingreifen kann.

Zur Übertragung des Drehmoments zwischen der Rotorwelle 18 und dem Verzahnungselement 32 sind am Ende 30 der Rotorwelle 18 radiale Ausformungen 74, beispielsweise als axial ausgerichtete Rändelung 75 oder als Kerbverzahnung 76 ausgebildet. Im Abschnitt 78 der Rotorwelle 18 mit der radialen Ausformung 74, weist die Rotorwelle 18 hierbei einen Durchmesser 80 auf, der nicht größer ist als über den restlichen Bereich 84 der Rotorwelle 18 ohne radialer Ausformung 74. Die Rotorwelle 18 ist dabei durchgangsgeschliffen, um durch das Lager 28 hindurch in das Getriebe 14 montiert werden zu können. Zur Erzeugung einer Presspassung weist die Bohrung 44 im Bereich des Abschnitts 78 mit den korrespondierenden radialen Ausformungen 74 einen geringeren Durchmesser 86 auf, als deren Durchmesser 82 über den restlichen axialen Bereich 84. Das Verhältnis des Durchmessers 80 der Rotorwelle 18 zum Durchmesser 82 der Bohrung 44 im Bereich 84 ohne radiale Ausformungen ist als Spielpassung ausgebildet. Dadurch lässt sich die Rotorwelle 18 über den größten Teil der Länge 92 der Bohrung ohne große Kraftanstrengung einschieben. Lediglich für den letzten Abschnitt 78 muss eine entsprechende Montagekraft zum Einpressen der radialen Ausformungen 74 aufgebracht werden.

Ist das Material der radialen Ausformung 74 härter als das Material der Wandung 94 der Bohrung, gräbt sich die radiale Ausformung 74 in die Wandung 94 ein und es entsteht ein Formschluss. Sind die radialen Ausformungen 74 nicht derart hart ausgebildet, resultiert eine kraftschlüssige Presspassung. Beispielsweise ist die Rotorwelle 18 mit den Ausformungen 74 aus Stahl, und das Verzahnungselement 32 mit der Wand 94 der Bohrung 44 ebenfalls aus Stahl oder einem weicheren Metall, wie beispielsweise Messing hergestellt.
Im Betrieb der Antriebseinheit 10 wird somit das Drehmoment über die drehsichere Verbindung der radialen Ausformungen 74 übertragen, die auftretenden Axialkräfte werden hingegen über die Anlagefläche 48 und die axiale Abstützfläche 60 an das Gehäuse 16 abgeführt.

In einer alternativen Ausführung sind am Ende 30 der Rotorwelle 18 benachbart zur Stirnfläche 50 keine radialen Ausformungen 74 angeordnet. Vielmehr weist die Rotorwelle 18 in einem Bereich 96 des offenen Endes der Bohrung 44 (in montiertem Zustand) radiale Ausformungen 73 auf, die in Figur 1 gestrichelt gezeichnet sind. Bei dieser Ausführung werden die radialen Ausformungen 73 erst auf der Rotorwelle 18 angeformt, nachdem diese durch die Lagerhülse 28 hindurch montiert wurde. Dabei werden beispielsweise mittels Prägen oder Stempeln radiale Ausformungen 73 angeformt, die einen größeren Durchmesser aufweisen, als der Durchmesser 80 des restlichen Bereichs 84 der Rotorwelle. Bei dieser Ausführung weist die Bohrung 44 einen über deren gesamten Länge 92 gleichbleibenden Durchmesser 82 auf. Bei der Montage des Verzahnungselements 32 gleitet die Rotorwelle 18 über den größten Teil der Länge 92 als Spielpassung, und erst im letzten Abschnitt 96 der radial überstehenden Ausformungen 73 ist zur Ausbildung einer Presspassung eine erhöhte Montagekraft notwendig.

Nach einer weiteren nicht dargestellten Ausführung weist die Rotorwelle 18 radiale Ausformungen 73, 74 auf, die formschlüssig in zuvor angeformte korrespondierende Gegenausformungen in der Wandung 94 der Bohrung 44 eingefügt werden.

Es sei angemerkt, dass hinsichtlich der in Figur 1 und in der Beschreibung dargestellten Ausführungsbeispiele viele Kombinationsmöglichkeiten untereinander möglich sind. Insbesondere kann die Form, die Anordnung und die Herstellung der radialen Ausformung 73, 74 variiert und den zu übertragenden Drehmomenten angepasst werden. Desweiteren ist die konkrete Ausgestaltung der Anschlagsfläche 48 und der axialen Abstützfläche 60 mit der entsprechenden Gegenfläche 62 nicht auf die dargestellte Ausführung beschränkt. Beispielsweise kann auch die axiale Abstützfläche 60 als ebene Fläche ausgebildet sein, die sich an einer gewölbten Gegenfläche 62 des Einstelleelements 64 oder des Gehäuses 16 abstützt. Ebenso kann die Kugeloberfläche 58 einstückig mit dem Verzahnungselement 32 ausgebildet sein, wobei dessen Verzahnung. Die erfindungsgemäße Getriebe-Antriebseinheit 10 wird bevorzugt für die Verstellung von beweglichen Teilen im Kraftfahrzeug, insbesondere von Sitzteilen, eingesetzt, ist jedoch nicht auf eine solche Anwendung beschränkt.

## Patentansprüche

1. Getriebe-Antriebseinheit (10), insbesondere zum Verstellen beweglicher Teile im Kraftfahrzeug, mit einer in einem Gehäuse (16) gelagerten Rotorwelle (18), die sich über mindestens eine Stirnseite (50) und ein separates Verzahnungselement (32) axial am Gehäuse (16) abstützt, wobei auf der Rotorwelle (18) das Verzahnungselement (32) zur Übertragung eines Drehmoments auf ein Getriebebauteil (38, 40) befestigt ist, **dadurch gekennzeichnet, dass** das Verzahnungselement (32) eine axiale Anlagefläche (48) aufweist, die an einer der Stirnseiten (50) der Rotorwelle (18) anliegt, dass die axiale Anlagefläche (48) an einer Bodenfläche (46) einer Bohrung (44) in dem Verzahnungselement (32) angeordnet ist, wobei an der Bodenfläche (46) der Bohrung (44) eine Durchgangsöffnung (52) angeformt ist.

2. Getriebe-Antriebseinheit (10) nach Anspruch 1, **dadurch gekennzeichnet, dass** das Verzahnungselement (32) eine axiale Abstützfläche (60) aufweist, über die sich die Rotorwelle (18) am Gehäuse (16) - insbesondere an einem im Gehäuse (16) befestigten Einstellelement (64) - abstützt.

3. Getriebe-Antriebseinheit (10) nach einem der vorhergehenden Ansprüche, **dadurch gekennzeichnet, dass** die axiale Abstützfläche (60) einen Radius (59) aufweist, und insbesondere als Kugeloberfläche (58) ausgebildet ist.

4. Getriebe-Antriebseinheit (10) nach einem der vorhergehenden Ansprüche, **dadurch gekennzeichnet, dass** die Durchgangsöffnung (52) eine die Abstützfläche (60) aufweisende Kugel (56) aufnimmt.

5. Getriebe-Antriebseinheit (10) nach einem der vorhergehenden Ansprüche, **dadurch gekennzeichnet, dass** die Rotorwelle (18) in einem axialen Abschnitt (78) eine radiale Ausformung (74) - insbesondere eine Rändelung (75) oder eine Kerbverzahnung (76) - aufweist, die beim Einführen in die Bohrung (44) des Verzahnungselements (32) eine drehfeste kraft- und/oder formschlüssige Verbindung bildet.

6. Getriebe-Antriebseinheit (10) nach einem der vorhergehenden Ansprüche, **dadurch gekennzeichnet, dass** die Bohrung (44) im axialen Bereich (78) der radialen Ausformung (74) der Rotorwelle (18) - insbesondere am Ende bei der Bodenfläche (46) - einen geringeren Innendurchmesser (86) aufweist, als in Bereichen (84) der Rotorwelle (18) ohne radiale Ausformungen.

7. Getriebe-Antriebseinheit (10) nach einem der vorhergehenden Ansprüche, **dadurch gekennzeichnet, dass** die Rotorwelle (18) nach dem Anformen der radialen Ausformung (74) durchgangsgeschliffen ist, und durch eine Lagerhülse (28) im Gehäuse (16) hindurch axial montierbar ist.

8. Getriebe-Antriebseinheit (10) nach einem der vorhergehenden Ansprüche, **dadurch gekennzeichnet, dass** die Verbindung der Rotorwelle (18) mit dem Verrahnungselement (32) im Bereich (78, 96) mit der radialen Ausformung (74, 73) als Presspassung und im Bereich (84) ohne radiale Ausformungen als Spielpassung ausgebildet ist.

9. Getriebe-Antriebseinheit (10) nach einem der vorhergehenden Ansprüche, **dadurch gekennzeichnet, dass** das Verzahnungselement (32) eine Schneckenverzahnung (34), eine Kegelradverzahnung oder eine gerade oder schräge Ritzelverzahnung aufweist, die mit einem weiteren Getriebeelement (40, 38) kämmt.

## Claims

1. Gear/drive unit (10), in particular for adjusting movable parts in the motor vehicle, having a rotor shaft (18) which is mounted in a housing (16) and is supported axially on the housing (16) via at least one end side (50) and a separate toothing element (32), the toothing element (32) being fastened on the rotor shaft (18) in order to transmit a torque to a gear component (38, 40), **characterized in that** the toothing element (32) has an axial bearing face (48) which bears against one of the end sides (50) of the rotor shaft (18), **in that** the axial bearing face (48) is arranged on a bottom face (46) of a hole (44) in the toothing element (32), a through opening (52) being formed on the bottom face (46) of the hole (44).

2. Gear/drive unit (10) according to Claim 1, **characterized in that** the toothing element (32) has an axial supporting face (60), via which the rotor shaft (18) is supported on the housing (16), in particular on a setting element (64) which is fastened in the housing (16).

3. Gear/drive unit (10) according to one of the preceding claims, **characterized in that** the axial supporting face (60) has a radius (59) and is configured, in particular, as a spherical surface (58).

4. Gear/drive unit (10) according to one of the preceding claims, **characterized in that** the through opening (52) receives a ball (56) which has the supporting face (60).

5. Gear/drive unit (10) according to one of the preceding claims, **characterized in that**, in an axial section (78), the rotor shaft (18) has a radial shaped-out moulding (74), in particular a knurled portion (75) or a serrated toothing system (76), which forms a rotationally fixed non-positive and/or positively locking connection when it is introduced into the hole (44) of the toothing element (32).

6. Gear/drive unit (10) according to one of the preceding claims, **characterized in that**, in the axial region (78) of the radial shaped-out moulding (74) of the rotor shaft (18), in particular at the end in the bottom face (46), the hole (44) has a smaller internal diameter (86) than in regions (84) of the rotor shaft (18) without radial shaped-out mouldings.

7. Gear/drive unit (10) according to one of the preceding claims, **characterized in that**, after the radial shaped-out moulding (74) is formed, the rotor shaft (18) is subjected to through-feed grinding, and can be mounted axially through a bearing sleeve (28) in the housing (16).

8. Gear/drive unit (10) according to one of the preceding claims, **characterized in that** the connection of the rotor shaft (18) to the toothing element (32) is configured as a press fit in the region (78, 96) with the radial shaped-out moulding (74, 73) and is configured as a clearance fit in the region (84) without radial shaped-out mouldings.

9. Gear/drive unit (10) according to one of the preceding claims, **characterized in that** the toothing element (32) has a worm toothing system (34), a bevel wheel toothing system or a spur or helical pinion toothing system which meshes with a further gear element (40, 38).

## Revendications

1. Unité d'entraînement de transmission (10), en particulier pour le réglage de pièces mobiles dans le véhicule automobile, comprenant un arbre de rotor (18) monté dans un boîtier (16), lequel arbre de rotor s'appuie axialement contre le boîtier (16) par le biais d'au moins un côté frontal (50) et d'un élément de denture séparé (32), l'élément de denture (32) étant fixé sur l'arbre de rotor (18) en vue de la transmission d'un couple à un composant de transmission (38, 40), **caractérisée en ce que** l'élément de denture (32) comprend une surface d'appui axiale (48) qui s'applique contre l'un des côtés frontaux (50) de l'arbre de rotor (18), **en ce que** la surface d'appui axiale (48) est disposée au niveau d'une surface de fond (46) d'un alésage (44) dans l'élément de denture (32), une ouverture traversante (52) étant formée au niveau de la surface de fond (46) de l'alésage (44).

2. Unité d'entraînement de transmission (10) selon la revendication 1, **caractérisée en ce que** l'élément de denture (32) comprend une surface d'appui axiale (60) par le biais de laquelle l'arbre de rotor (18) s'appuie contre le boîtier (16), en particulier contre un élément d'ajustement (64) fixé dans le boîtier (16).

3. Unité d'entraînement de transmission (10) selon l'une quelconque des revendications précédentes, **caractérisée en ce que** la surface d'appui axiale (60) présente un rayon (59) et est réalisée en particulier sous forme de surface sphérique (58).

4. Unité d'entraînement de transmission (10) selon l'une quelconque des revendications précédentes, **caractérisée en ce que** l'ouverture traversante (52) reçoit une bille (56) comprenant la surface d'appui (60).

5. Unité d'entraînement de transmission (10) selon l'une quelconque des revendications précédentes, **caractérisée en ce que** l'arbre de rotor (18) comprend, dans une partie axiale (78), une partie saillante radiale (74), en particulier un moletage (75) ou des dentelures (76), laquelle partie saillante radiale forme, lors de l'insertion dans l'alésage (44) de l'élément de denture (32), une liaison solidaire en rotation par engagement par force et/ou par complémentarité de formes.

6. Unité d'entraînement de transmission (10) selon l'une quelconque des revendications précédentes, **caractérisée en ce que** l'alésage (44) présente, dans la région axiale (78) de la partie saillante radiale (74) de l'arbre de rotor (18), en particulier à l'extrémité proche de la surface de fond (46), un diamètre intérieur (86) plus petit que dans des régions (84) de l'arbre de rotor (18) sans parties saillantes radiales.

7. Unité d'entraînement de transmission (10) selon l'une quelconque des revendications précédentes, **caractérisée en ce que** l'arbre de rotor (18) est rectifié en passe continue après la formation de la partie saillante radiale (74), et peut être monté axialement à travers une douille de palier (28) dans le boîtier (16).

8. Unité d'entraînement de transmission (10) selon l'une quelconque des revendications précédentes, **caractérisée en ce que** la liaison de l'arbre de rotor (18) à l'élément de denture (32) est réalisée en tant qu'ajustement forcé dans la région (78, 96) dotée de la partie saillante radiale (74, 73) et est réalisée en tant qu'ajustement avec jeu dans la région (84) dépourvue de parties saillantes radiales.

9. Unité d'entraînement de transmission (10) selon l'une quelconque des revendications précédentes, **caractérisée en ce que** l'élément de denture (32) comprend une denture hélicoïdale (34), une denture conique ou une denture de pignon droite ou hélicoïdale qui s'engrène avec un autre élément de transmission (40, 38).
